# EUROPEAN PATENT APPLICATION

(11) **EP 2 112 744 A1**
(43) Date of publication of application: **28.10.2009**
(21) Application number: 08425288.1
(22) Date of filing: 24.04.2008
(51) Int. Cl.: H02K 3/12, H02K 1/27, H02K 5/20, H02K 9/19

(54) **Multiphase synchronous electrical machine for converting kinetic energy into electrical energy and electrical energy into kinetic energy onboard a transport vehicle, and transport vehicle provided with said electrical machine**

(71) Applicant: Magneti Marelli Holding S.p.A., 20011 Corbetta (IT)
(72) Inventor: Ciampolini, Franco, 40134 Bologna (IT); Guccione, Augusto Eugenio Michele Maria, 28041 Arona (IT); D'Alpaos, Egidio, 32010 Pieve d'Alpago (IT); Lissoni, Paolo, 20049 Concorezzo (IT)
(74) Representative: Bergadano, Mirko

(57) **Abstract**

A multiphase synchronous electrical machine (1) for converting kinetic energy into electrical energy and electrical energy into kinetic energy on board a transport vehicle (2) has a rotor (4) with permanent magnets (22) extending along an axis (A), and a stator (5), which is provided with a stator pack (25) having slots (27), each of which has two side faces (39) converging towards the axis (A), and with an electrical winding (26) provided with sets of bars (30, 31, 32, 33) housed at least in part within the slots (27), in which the bars (30, 31, 32, 33) of each set are shaped and coupled to one another so that each set of bars (30, 31, 32, 33) has a cross section substantially identical to the cross section of the slot (27).

## Description

The present invention relates to a multiphase synchronous electrical machine for converting kinetic energy into electrical energy and electrical energy into kinetic energy on board a transport vehicle.

In particular, the present invention relates to an electrical machine that has a rotor with permanent magnets extending along an axis, a stator provided with a stator pack having slots, each of which has two faces converging towards the axis, and with an electrical winding having bars housed at least in part within the slots.

The use of electrical machines of the type identified above finds increasingly widespread application in transport vehicles, in particular in transport vehicles equipped with an internal-combustion engine and in which the electrical machines have the function of generating electrical energy during braking of the transport vehicle and of converting the electrical energy generated into motive force in given operating conditions. These transport vehicles are generally defined as hybrid vehicles.

The process of conversion of kinetic energy into electrical energy and of electrical energy into kinetic energy requires installation on board the motor vehicle of an additional system known as KERS (Kinetic Energy Recovery System), which comprises, in addition to the electrical machine of a reversible type, a unit for accumulation of the electrical energy, and a control unit connected to the electrical machine and to the accumulation unit.

Said additional system, albeit providing encouraging results from the standpoint of the reduction of consumption and pollutants, in effect, increases the weight and the overall dimensions of the transport vehicle, and in many cases the application of said type of additional system is still limited.

An aim of the present invention is to provide a multiphase synchronous electrical machine for converting kinetic energy into electrical energy and electrical energy into kinetic energy on board a transport vehicle that be free from the drawbacks of the known art.

Furthermore, an aim of the present invention is to provide a multiphase synchronous electrical machine for converting kinetic energy into electrical energy and electrical energy into kinetic energy on board a transport vehicle that has a very high power/weight ratio and that at the same time is very reliable.

In accordance with said aims, a multiphase synchronous electrical machine is provided for converting kinetic energy into electrical energy and electrical energy into kinetic energy on board a transport vehicle, the machine comprising a rotor with permanent magnets extending along an axis, a stator provided with a stator pack having slots, each of which has two side faces converging towards the axis, and with an electrical winding comprising sets of bars housed at least in part within the slots, the electrical machine being **characterized in that** the bars of each set are shaped and coupled to one another so that each set of bars has a cross section substantially identical to the cross section of the slot.

In this way, the electrical winding uniformly fills the slots with a coefficient of filling much higher than that of the known art, with values comprised between 70% and 95% according to the number of bars inserted per slot. This enables reduction of the ohmic losses and an increase in the weight/power ratio.

The present invention moreover regards a transport vehicle.

Provided according to the present invention is a transport vehicle comprising a supporting chassis and at least one wheel that can turn with respect to the chassis, the transport vehicle being **characterized in that** it comprises an electrical machine according to any one of Claims 1 to 17 and designed to receive kinetic energy from said wheel and transmit kinetic energy to said wheel.

Further characteristics and advantages of the present invention will emerge clearly from the ensuing description of a non-limiting example of embodiment thereof, with reference to the figures of the annexed drawings, wherein:
- Figure 1 is a longitudinal sectional view, with parts removed for reasons of clarity of an electrical machine built in accordance with the present invention;
- Figure 2 is a view in front elevation and at an enlarged scale, with parts removed for reasons of clarity, of a detail of the electrical machine of Figure 1;
- Figure 3 is a perspective view, with parts removed for reasons of clarity and at an enlarged scale of a component of the electrical machine of Figure 1; and
- Figure 4 is a schematic view, with parts removed for reasons of clarity, of a vehicle equipped with the electrical machine of Figure 1.

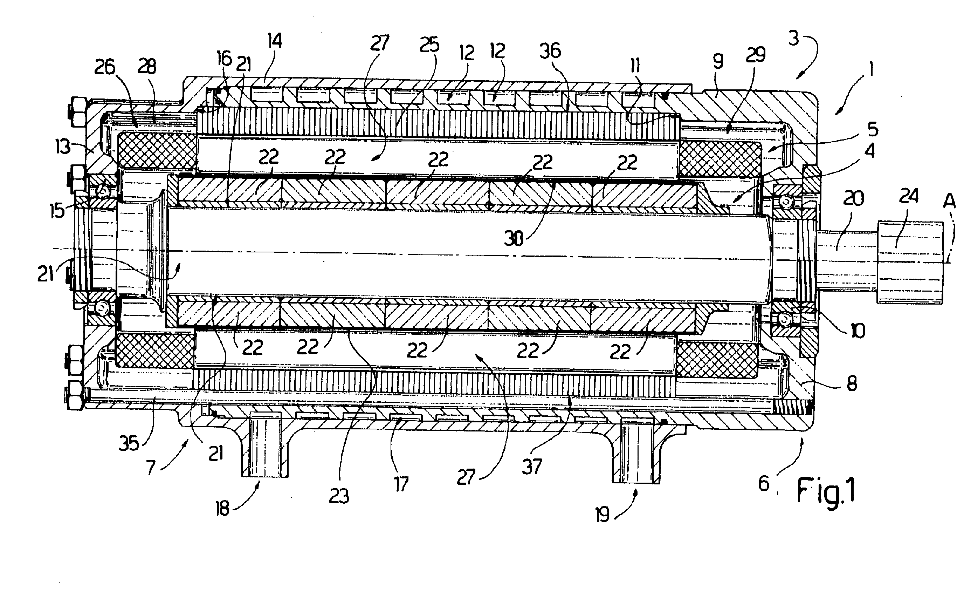

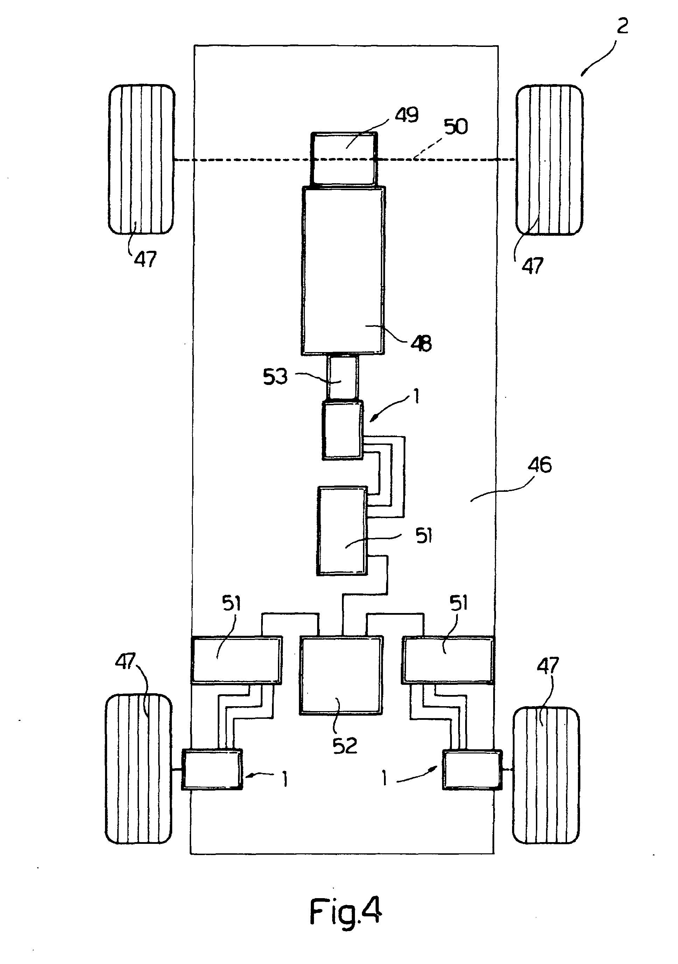

Designated as a whole by the reference number 1 in Figure 1 is a multiphase synchronous electrical machine for converting kinetic energy into electrical energy and electrical energy into kinetic energy on board a transport vehicle 2 (Figure 4).

In particular, the electrical machine 1 is a very compact reversible three-phase synchronous electrical machine capable of supplying a high power with respect to the weight of the electrical machine 1 itself. The electrical machine 1 has a substantially cylindrical shape, extends along an axis A, and is **characterized in that** it has an overall length greater than the diameter, in particular a length equal to approximately twice the diameter.

The electrical machine 1 comprises a supporting casing 3, a rotor 4 extending along the axis A, and a stator 5 set around the rotor 4.

The supporting casing 3 comprises two half-shells 6 and 7, fitted axially inside one another. The half-shells 6 and 7 have a substantially cylindrical shape and are assembled together around the rotor 4 and the stator 5. The half-shell 6 comprises an end flange 8, set perpendicular to the axis A, and a cylindrical wall 9 set parallel to the axis A. The flange 8 has a central hole for housing a bearing 10 for supporting the rotor 4, whilst the wall 9 has an internal shoulder 11, designed to be set bearing upon the stator 5, and an external helical groove 12.

The half-shell 7 comprises an end flange 13 set perpendicular to the axis A, and a cylindrical wall 14 set parallel to the axis A. The flange 13 has a central hole for housing a bearing 15 for supporting the rotor 4, whilst the wall 14 has an internal shoulder 16, designed to be set bearing upon the stator 5.

The wall 14 partially overlaps the wall 9 in a position corresponding to the external helical groove 12 so as to form a helical cooling chamber 17, and has a supply mouth 18 and an outlet mouth 19 designed to be connected, respectively, to a pipe for supply and a pipe for evacuation of coolant (not illustrated in the attached figures), in particular, a liquid coolant, which is conveyed along the helical cooling chamber 17 for cooling the stator 5.

The rotor 4 comprises a shaft 20, which is supported by the bearings 10 and 15 and comprises a central portion, along which four plane faces 21 are provided, and a plurality of permanent magnets 22, which are arranged in four rows along the plane faces 21. In the case in point, illustrated in Figure 1, the permanent magnets 22 are arranged in four rows of five permanent magnets 22 each.

Each permanent magnet 22 is preferably made of samarium-cobalt and is glued to a respective plane face 21. The rotor 4 comprises a tube 23 made of carbon fibre set around the permanent magnets 22 to prevent possible detachment of the permanent magnets 22 from the shaft 20. According to an alternative embodiment (not illustrated in the attached figures), the tube 23 made of carbon fibre is omitted, and the rotor 4 comprises a Zylon® wire wound in a helix around the permanent magnets 22 so as to prevent detachment thereof.

The shaft 20 has one end set outside the supporting casing 3 and having a shank 24 for attachment to a gear or pulley (not illustrated in the attached figures). The rotor 4, in particular the active part thereof occupied by the permanent magnets 22, has a diameter sensibly smaller than the length of the rotor 4, in particular than the active part thereof, so as to limit the centrifugal forces and guarantee low inertia to rotation and a greater reaction to the change of r.p.m.

The stator 5 comprises a stator pack 25 and an electrical winding 26. The stator pack 25 is formed by a pack of laminations set perpendicular to the axis A and has axial slots 27, i.e., ones set parallel to the axis A.

In accordance with a variant (not illustrated), the axial slots are slightly inclined with respect to the axis A by an angle referred to as skew angle.

The electrical winding 26 comprises a first portion that extends within the slots 27 and a second portion that extends on the outside of the slots 27 and in the case in point is defined by two heads 28 and 29 set up against the opposite ends of the stator pack 25.

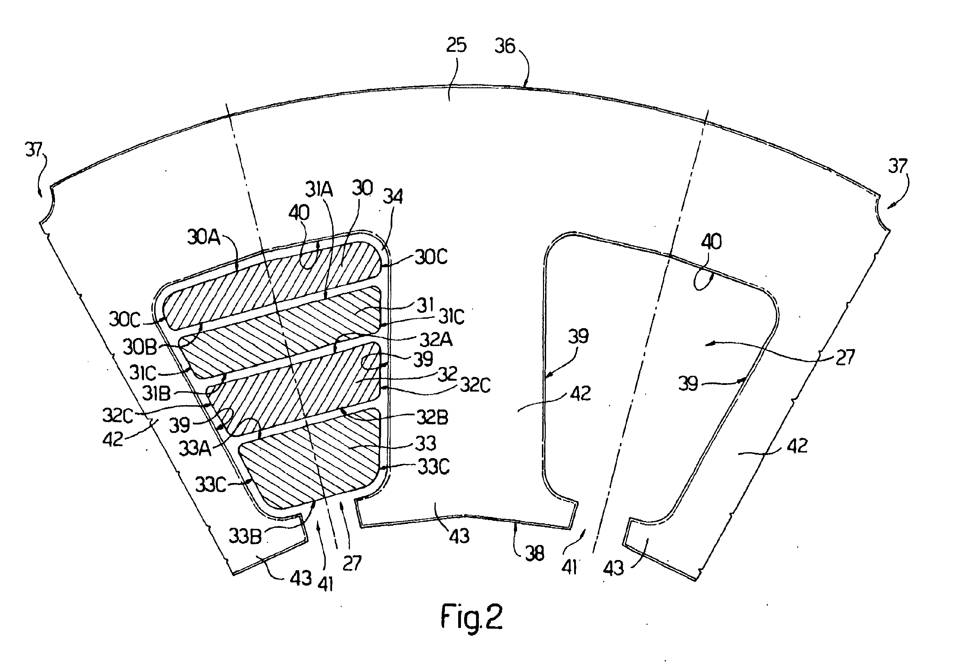

With reference to Figure 2, the electrical winding 26 comprises conductive bars 30, 31, 32, 33, which are arranged in part in the slots 27 and in part in a position corresponding to the heads 28 and 29, in which the bars 30, 31, 32, 33 are connected to one another so as to define a given electrical arrangement of the electrical winding 26.

In the case in point, Figure 2 illustrates a set formed by four bars 30, 31, 32, and 33 housed within a single slot 27. Basically each slot 27 is occupied by a set of four bars 30, 31, 32, 33.

Wound around each of the bars 30, 31, 32, and 33 is an insulating tape, and each bar is further insulated from the stator pack 25 and from the other bars 30, 31, 32, 33 by a resin impregnated in the stator pack 25. Impregnation with the resin is performed once the entire electrical winding 26 has been completed and assembled on the stator pack 25. In Figure 2, the resin and the insulating tape are designated as a whole by the reference number 34.

With reference to Figure 1, the stator pack 25 is set bearing upon the shoulders 11 and 16, respectively, of the half-shells 6 and 7 and is gripped between the half-shells 6, 7, which are assembled by means of tie-rods 35 set parallel to the axis A.

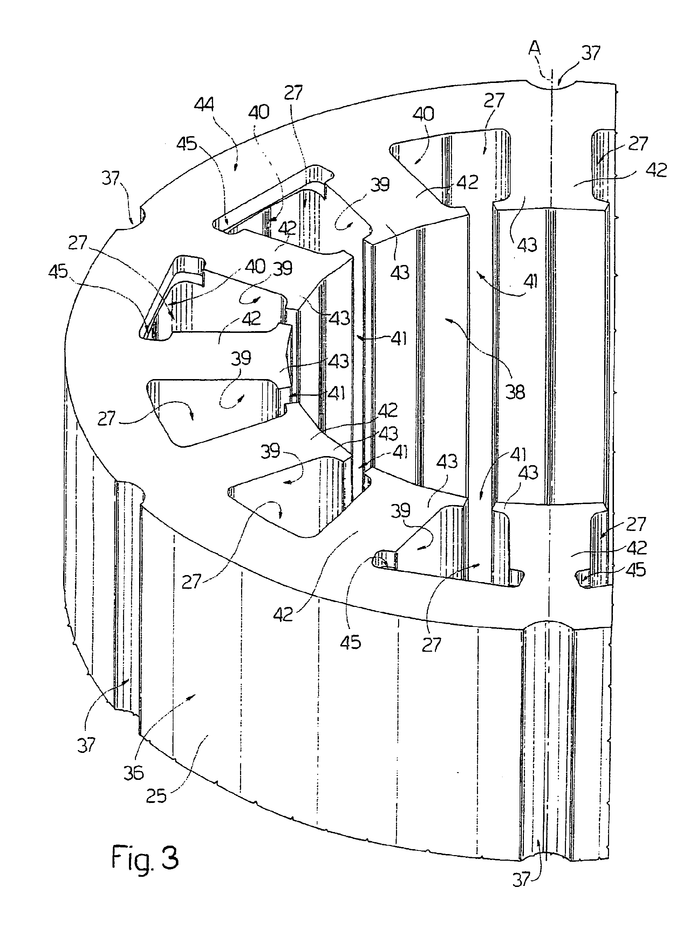

With reference to Figure 3, the stator pack 25 has a substantially cylindrical shape, an outer surface 36 with grooves 37 set at intervals apart for housing the tie-rods 35, and an inner surface 38 interrupted by the twelve slots 27. It is understood that the number of slots 27 is a design parameter and, all the other characteristics being equal, the number of slots 27 is generally chosen from any multiple of three.

Each slot 27 is delimited by two opposite, plane, side faces 39, converging towards the axis A, a bottom face 40 radiused to the side faces 39, an opening 41 towards the axis A and towards which the side faces 39 are radiused. Two adjacent slots 27 are separated from one another by a diaphragm 42 that expands in a position corresponding to the opening 41 in a so-called polar expansion 43.

The stator pack 25 has two end faces 44 (just one of which is illustrated in Figure 3) and, along said faces 44 and in a position corresponding to some slots 27, undercuts 45 defining respective seats, which are designed to enable insertion of respective tabs of insulating material for insulating the bars 30 after welding thereof in a position corresponding to the heads 28 and 29 (Figure 1).

With reference to Figure 2, each slot 27 has a cross section substantially shaped like an isosceles trapezium, in which the bottom face 40, even though it is slightly arched, represents the major base, the opening 41 basically defines the minor base, and the side faces 39 define the inclined sides of the isosceles trapezium.

The bars 30, 31, 32, and 33 of one and the same set of bars set in a slot 27 have respective cross sections having a shape and dimensions different from one another.

In greater detail, the bar 30 has a face 30A facing the bottom face 40, a face 30B, and two inclined faces 30C. The bar 30 is characterized by having a flattened shape: the height of the bar 30 measured in a radial direction, i.e., the height of the cross section of the bar 30, is sensibly smaller than the width of the face 30A and even less than half of the width of the face 30A.

The bar 31 has a face 31A facing the face 30B, a face 31B, and two inclined faces 31C. The bar 31 has a sturdier appearance than the bar 30 and has a height greater than that of the bar 30.

The bar 32 has a face 32A facing the face 31B, a face 32B, and two inclined faces 32C. The bar 32 has a sturdier appearance than the bar 31 and has a height (measured in a radial direction) greater than the height of the bar 31.

The bar 33 has a face 33A facing the face 32B, a face 33B facing the opening 41, and two inclined faces 33C. The bar 33 has a particularly elongated appearance: the height in a radial direction is greater than half the width of the face 33A and greater than the height of the bar 32.

In general, the bars 30, 31, 32, and 33 have an increasing height starting from the bottom face 40 towards the opening 41, and at the same time have an average width that decreases starting from the bottom face 40 towards the opening 41.

The sizing of the bars 30, 31, 32 and 33 of each set substantially enables the inclined faces 30C, 31C, 32C and 33C to be kept aligned and a cross section of the same shape and substantially complementary to the cross section of the slot 27 to be thus defined for each set of bars 30, 31, 32, and 33.

In particular, the inclined faces 30C, 31C, 32C, 33C of each bar 30, 31, 32, 33 are set facing and parallel to a respective side face 39 of the slot 27.

Furthermore, the face 30A is set parallel to the bottom face 40, whilst the faces 31A, 32A, 33A and the faces 30B, 31B, 32B, 33B of each bar 30, 31, 32, 33 are set parallel to one another.

The only difference between the cross section of the set of bars 30, 31, 32 and 33 and the cross section of the slot 27 is determined by the inevitable presence of the insulating material 34, which must be set between the bars 30, 31, 32 and 33 and the inclined faces and the bottom face 40 of the slot 27, and in any case the gap occupied by the insulating material is of the order of tenths of a millimetre, the representation in Figure 2 being at a very enlarged scale.

The shape of the bars 30, 31, 32 and 33 and their arrangement in the slot 27 enable a filling of the slot 27 that is much better than that of the known art, with values of up to ninety-five per cent, which guarantees a very high efficiency of the electrical machine 1.

At the same time, the progressive increase of the height of the bars 30, 31, 32 and 33 and the reduction of the average width thereof in a radial direction towards the axis A guarantees an efficient heat exchange also for the innermost bars 32 and 33 and consequently increases the efficiency and performance of the electrical machine 1. To enable a clearer understanding of this statement, it should be recalled that the cooling chamber 17 delimited by the half-shells 6 and 7 is basically in contact with the stator pack 25 along the outer surface 36 thereof. Consequently, the stator pack 25 has an increasing thermal gradient starting from the outer surface 36 towards the inner surface 38. It follows that the bars 32 and 33 closer to the inner surface 38 are at a disadvantage as regards the thermal jump, which is a fundamental parameter that regulates heat exchange. For this reason, the progressive increase of the height and the reduction of the average width of the bars 30, 31, 32, 33 enables faces 30C, 31C, 32C, 33C to be defined that progressively increase towards the thermally unfavoured areas of the stator pack 25, and a satisfactory heat exchange to be provided also in those areas.

With reference to Figure 4, the electrical machine 1 is mounted on the transport vehicle 2. In the case in point, the transport vehicle 2 comprises: a chassis 46 and four wheels 47; an internal-combustion engine 48; a gear change 49; a transmission 50 for transferring the motion between the gear change 49 and two of the four wheels 47; and three reversible electrical machines 1. An electrical machine 1 is connected to the motor 48 and has the function of alternator and at the same time of starting motor, whilst the two other electrical machines 1 are coupled, respectively, to the two wheels 47 not connected to the transmission 50. Each electrical machine 1 is connected to a respective control unit 51, which is in turn connected to an accumulation unit 52 common to all three electrical machines 1.

Set between the electrical machine 1 and the motor 48 is a motor reducer 53, which has the function of providing a ratio of 2:1 between the r.p.m. in the electrical machine 1 and the r.p.m. of the engine 48. This transmission ratio enables optimal exploitation of the characteristics of the electrical machine 1: the power delivered by the electrical machine 1 is directly proportional to the r.p.m. of the electrical machine 1 itself, whilst its weight is, to a first approximation, directly proportional to its maximum torque. An engine at high speed and relatively low torque consequently presents a high power density.

The electrical machines 1 mounted on the wheels 47 drive said wheels 47 in rotation according to the commands issued by the respective control unit 51, which are in turn governed by signals issued by a device for controlling stability of a known type and not illustrated in the attached figures.

Finally, it is evident that modifications and variations may be made to the electrical machine 1 described herein and to its use, without thereby departing from the scope of the annexed claims.

In particular, even though the present description regards a stator with twelve slots, it is understood that the invention is applicable also to stators with a greater number of slots.

The present invention is particularly advantageous in that it enables a number of bars to be set in one and the same slot and hence complex winding arrangements to be obtained without increasing excessively the number of slots and without reducing the dimensions of the diaphragms of separation of the slots. If the diaphragms were excessively thin this could even lead to failure of the diaphragms. In fact, the electrical machine forming the subject of the present invention is designed to develop a considerable power, higher than 150 hp, has a very limited encumbrance, considering that its overall length is in the region of 150 mm and its diameter in the region of 100 mm.

It is thus understandable that the materials constituting the electrical machine 1 are subject to considerable stresses.

## Claims

1. A multiphase synchronous electrical machine for converting kinetic energy into electrical energy and electrical energy into kinetic energy on board a transport vehicle (2); the electrical machine (1) comprising a rotor (4) with permanent magnets (22) extending along an axis (A), and a stator (5), which is provided with a stator pack (25) having slots (27), each of which has two side faces (39) converging towards the axis (A), and with an electrical winding (26) comprising sets of bars (30, 31, 32, 33) housed at least in part within the slots (27); the electrical machine (1) being **characterized in that** the bars (30, 31, 32, 33) of each set are shaped and coupled to one another so that each set of bars (30, 31, 32, 33) has a cross section substantially identical to the cross section of the slot (27).

2. The electrical machine according to Claim 1**, characterized in that** each slot (27) has a cross section shaped like an isosceles trapezium; each set of bars (30, 31, 32, 33) having a cross section shaped like an isosceles trapezium complementary to the cross section of the slot (27).

3. The electrical machine according to Claim 1 or Claim 2, **characterized in that** each bar (30; 31; 32; 33) comprises: a first face (30A; 31A; 32A; 33A); a second face (30B; 31B; 32B; 33B); and two faces (30C; 31C; 32C; 33C) inclined with respect to the first and second faces (30A; 31A; 32A; 33A; 30B; 31B; 32B; 33B).

4. The electrical machine according to Claim 3, **characterized in that** the inclined faces (30C; 31C; 32C; 33C) of each bar (30; 31; 32; 33) are aligned to the inclined faces (30C; 31C; 32C; 33C) of the adjacent bar (30; 31; 32; 33).

5. The machine according to Claim 3 or Claim 4**, characterized in that** each slot (27) comprises two side faces (39); the inclined faces (30C; 31C; 32C; 33C) of each bar (30; 31; 32; 33) being set facing and parallel to a respective side face (39) of the slot (27).

6. The machine according to any one of Claims 3 to 5, **characterized in that** each slot (27) comprises a bottom face (40); the first faces (30A; 31A; 32A; 33A) and the second faces (30B; 31B; 32B; 33B) of each bar (30; 31; 32; 33) being substantially set parallel to the bottom face (40).

7. The electrical machine according to any one of the preceding claims, **characterized in that** each slot (27) comprises a bottom face (40) and an opening (41) opposite to the bottom face (40); each set of bars (30, 31, 32, 33) comprising a number of bars (30, 31, 32, 33) arranged in succession from the bottom face (40) towards the opening (41).

8. The electrical machine according to Claim 7, **characterized in that** the bars (30, 31, 32, 33) of each set of bars (30, 31, 32, 33) have an increasing height measured in a radial direction starting from the bottom face (40) towards the opening (41).

9. The machine according to Claim 7 or Claim 8, **characterized in that** the bars (30, 31, 32, 33) of each set of bars (30, 31, 32, 33) have an average width measured in a tangential direction that decreases starting from the bottom face (40) towards the opening (41).

10. The electrical machine according to any one of Claims 7 to 9, **characterized in that** each set of bars (30, 31, 32, 33) comprises a first bar (30) facing the bottom face (40), a second bar (31) facing the first bar (30), a third bar (32) facing the second bar (31), and a fourth bar (33) facing the third bar (32) and the opening (41).

11. The electrical machine according to any one of Claims 1 to 10, **characterized in that** it comprises a supporting casing (3) comprising a cooling chamber (17); the stator pack (25) having an outer surface (36) in contact with the cooling chamber (17) and an inner surface (38) facing the rotor (4); each slot (27) having a bottom face (40) in the proximity of the outer surface (36) and an opening (41) in a position corresponding to the inner surface (38).

12. The electrical machine according to Claim 11, **characterized in that** the cooling chamber (17) comprises a helical groove (12) connected to an inlet mouth (18) and an outlet mouth (19) for supplying and expelling, respectively, a cooling fluid to/from the cooling chamber (17).

13. The electrical machine according to Claim 12, **characterized in that** the supporting casing (3) comprises two half-shells (6, 7), each of which comprises: a respective flange (8, 13) for supporting a respective bearing (10, 15) coupled to the rotor (4); and a respective cylindrical wall (9, 14) partially overlapping the cylindrical wall (14, 9) of the other half-shell (7,6) so as to form said cooling chamber (17).

14. The electrical machine according to any one of Claims 1 to 13, **characterized in that** the rotor (4) comprises a shaft (20), arranged on which are permanent magnets (22).

15. The electrical machine according to Claim 14, **characterized in that** the shaft (20) comprises plane faces (21), glued along which are the permanent magnets (22).

16. The electrical machine according to Claim 14 or Claim 15, **characterized in that** the rotor (4) comprises a tube (23) made of carbon fibre set around the permanent magnets (22).

17. The electrical machine according to Claim 15 or Claim 16, **characterized in that** the rotor (4) comprises an active part provided with the permanent magnets (22) having a length equal to at least three times the length thereof.

18. A transport vehicle comprising a supporting chassis (46) and at least one wheel (47) that can turn with respect to the chassis (46); the transport vehicle being **characterized in that** it comprises an electrical machine (1) according to any one of Claims 1 to 17 and designed to receive kinetic energy from said wheel (47) and transmit kinetic energy to said wheel (47).

19. The transport vehicle according to Claim 18, **characterized in that** it comprises two wheels (47) that can turn with respect to the chassis (46), and two electrical machines (1) coupled to the respective wheels (47).

20. The vehicle according to Claim 18 or Claim 19, **characterized in that** it comprises an internal-combustion engine (48) designed to supply the energy necessary for driving the transport vehicle (2) and an electrical machine (1) connected to the internal-combustion engine (48) and having the functions of alternator and starting motor.
